# EUROPEAN PATENT SPECIFICATION

(11) **EP 3 250 969 B1**
(45) Date of publication and mention of the grant of the patent: **20.11.2019**
(21) Application number: 15805529.3
(22) Date of filing: 09.12.2015
(51) Int. Cl.: G05B 15/02

(54) **METHOD AND SYSTEM FOR INTEGRATING WEARABLE ARTICLES INTO OPERATION OF BUILDING MANAGEMENT SYSTEMS**
VERFAHREN UND SYSTEM ZUR INTEGRATION VON AM KÖRPER TRAGBAREN ARTIKELN IN DEN BETRIEB VON GEBÄUDEVERWALTUNGSSYSTEMEN
PROCÉDÉ ET SYSTÈME POUR INTÉGRER DES ARTICLES PORTABLES DANS LE FONCTIONNEMENT DE SYSTÈMES DE GESTION DE BÂTIMENT

(30) Priority: 27.01.2015 US 201514606406
(43) Date of publication of application: 06.12.2017
(73) Proprietor: Robert Bosch GmbH, 70442 Stuttgart (DE)
(72) Inventor: PETRICOIN JR., Dennis, Hemlock, New York 14466 (US)
(86) International application number: PCT/EP2015/079076
(87) International publication number: WO 2016/119961

(56) References cited:
- US-A1- 2007 173 978
- US-A1- 2007 219 645
- US-A1- 2012 184 299
- US-A1- 2012 310 376

## Description

### BACKGROUND

The present invention relates to the use of a wearable article in the control of a smart building system.

Intrusion/security systems inherently are designed to protect some space and/or person(s) from harm. With few exceptions, this concept is based upon allowing approved persons into a protected area (house, building, room, etc.), while either preventing or annunciating the presence of persons that are not allowed. Many access control systems require a person to present some sort of information (card, token, passcode, etc.) to an access control system that determines if access should be granted (e.g. unlock the door). For intrusion systems, the presented information will arm, disarm or otherwise change the state of the intrusion system's operation.
US 2007/173978 A1 discloses a building automation system able to identify a person in a building using biometric sensors and wearable RFID badges.

Also, US 2012/310376 A1 discloses a building automation system able to control devices in response to sensing the presence of a certain user by detecting their phone, RFID tag or clothing.

Security and smart building systems tend to make use of passcodes for authority (passcodes can be forgotten or difficult to manage), and motion detection for presence (if someone sits motionless, the system may determine that people have left the room). Thus, the system may fail to operate properly. The invention reduces or eliminates user effort in regard to the operation of security and smart building systems.

### SUMMARY

Within the world of smart buildings, the goal is to have the building (home, business, premises, etc.) operate in a way to maximize comfort, convenience and efficiency based on occupancy and location of people. The challenge is that a building management system needs to know if a person is authorized and where the authorized person is located (e.g. turn on/off lights when people are present, turn down heat when a house or a room is empty, etc.).

In one embodiment the invention provides a method for operating a building management system to provide control of a building in response to sensing of a wearable article for a user, comprising: wirelessly sensing a wearable article; identifying a unique user wearing the wearable article; determining a location of the wearable article of an identified unique user inside or outside of the building; and for an identified unique user approaching an entrance of the building or located within the building, based on a user profile for an identified unique user and the location of the wearable article of an identified unique user, controlling at least one from the group of: a building access control system, a building alarm system, one or more lights of the building, and temperature values of one or more areas of the building.

Another embodiment includes limiting access to particular areas of the building and limiting entry into the building to predetermined times for an identified unique user.

One embodiment includes activating lights when an identified unique user enters into a room within the building and deactivating lights when an identified unique user is not located within the room within the building.

Another embodiment includes an identified unique user issuing a request for a location of a wearable article of another unique user; providing the request to additional building management systems; identifying whether the wearable article of another unique user is located in or near any of the additional building management systems; and informing an identified unique user of the location of the wearable article of another identified unique user that is located in or near one of the additional building management systems.

In one embodiment, the wearable article comprises a low power device that provides wireless signals, and the step of wirelessly sensing a wearable article comprises a wearable article building sensing unit configured to receive the wireless signals from the wearable article to determine the location of the wearable article.

Another embodiment includes receiving a message from a remote location informing that a delivered item is being delivered at a building of the building management system, and informing an identified unique user of the delivered item.

In one embodiment, the wearable article building sensing unit comprises a transceiver for communication with the wearable article via at least one from the group of: a Wi-Fi data connection, a Bluetooth data connection, an Android data connection, and an iOS data connection.

In another embodiment, the step of controlling upon approach of an identified unique user to an entrance, comprises controlling each of the building access control system, one or more lights within areas of the building, and temperature values of one or more areas within the building based on the user profile of an identified unique user and the location of an identified unique user.

One embodiment includes controlling appliances upon entering and exiting areas by the wearable article of an identified unique user within the building based on the user profile and the location of an identified unique user. Controlling appliances includes operating at least one of the group of a television, a sound system and an entertainment system, wherein the at least one of the group of the television, the sound system and the entertainment system outputs content based upon the user profile of an identified unique user. The step of controlling the appliances is further based on voice commands from an identified unique user. In another embodiment, the wearable article comprises a microphone for sensing the voice commands, and in response to the voice commands, the wearable article provides the wireless signals to the wearable article sensor unit.

In one embodiment the invention provides a building management system for providing control of a building in response to sensing of a wearable article of a unique user, comprising: a wearable article for wearing by a unique user; at least one wearable article building sensing unit configured to wirelessly obtain information from the wearable article; a building management controller configured to: receive an output from the wearable article building sensing unit; identify a unique user with the wearable article; determine a location of the wearable article of an identified unique user inside or outside of the building; and control at least one of: a building access control system, one or more lights, and temperature values of one or more areas of the building based on a user profile of an identified unique user and the location of the wearable article of an identified unique user.

In another embodiment the building management controller is configured to limit access to particular areas of the building and to limit entry times to particular areas of the building for an identified unique user.

In one embodiment the building management controller is configured to activate one or more lights when an identified unique user enters into an area of the building and deactivate one or more lights when an identified unique user is not located within the area of the building. The wearable article comprises one from the group consisting of: glasses, a wristwatch, a bracelet, a necklace and a ring, and wherein the wearable article includes a low power device.

In one embodiment the wearable article comprises a processor with a memory, a transceiver and an antenna.

In another embodiment the invention includes a building management system for providing control of a building in response to sensing of a wearable article of a unique user, comprising: a wearable article for wearing by a unique user; at least one wearable article sensing system configured to wirelessly obtain information from the wearable article; a building management controller configured to: receive an output from the wearable article sensing system; identify a unique user wearing the wearable article; determine a location of the wearable article of an identified unique user that is inside or outside of the building; and control at least one of: a building access control system, one or more lights, and temperature values of one or more areas of the building based on a user profile of an identified unique user and the location of the wearable article of an identified unique user.

In one embodiment the wearable article sensing system comprises a remote tower for receiving information from the wearable article and transmitting information to the wearable article. Information from the remote tower is transmitted to the building management controller via a communication network.

Other aspects of the invention will become apparent by consideration of the detailed description and accompanying drawings.

### BRIEF DESCRIPTION OF THE DRAWINGS

Fig. 1 shows a block diagram of the building management system.
Fig. 2 shows a diagram of a building for a building management system.
Fig. 3 shows one embodiment of a wearable article.
Fig. 4 shows an embodiment of a wearable article.
Fig. 5 shows a block diagram of the wearable article of Fig. 4.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

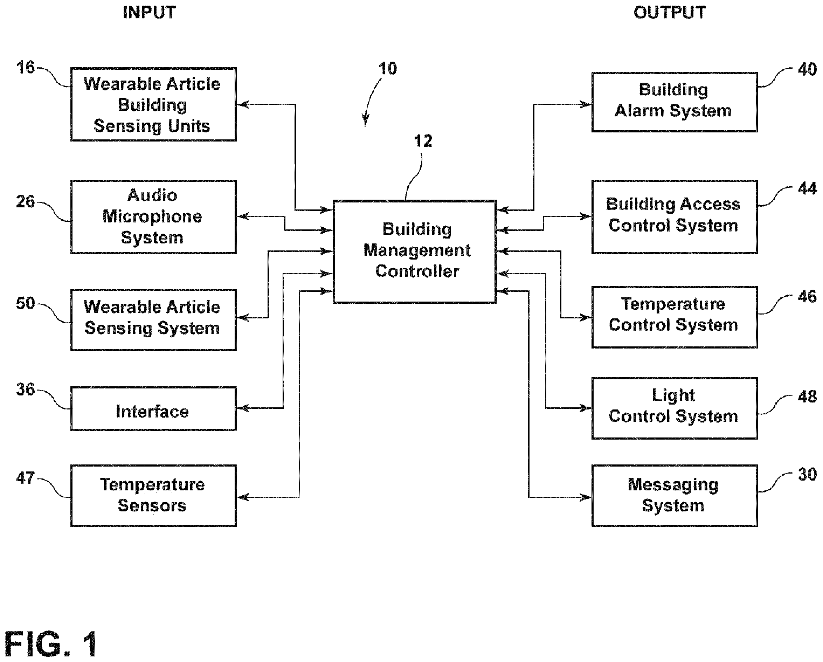

Fig. 1 illustrates a building management system 10 for control of various conditions within a building, such as a home or a commercial structure. The building management system 10 includes a building management controller 12. The building management controller 12 receives inputs from a plurality of systems and/or devices. The building management controller 12 provides outputs to a plurality of systems within a building and/or elsewhere. In some embodiments, the building management controller 12 is disposed within a building at a fixed location. In other embodiments, the building management controller 12 is disposed on a server at a remote location. In some embodiments, the building management controller 12 is provided on the cloud or with a portable communication device that is networked to the systems provided with the corresponding building.

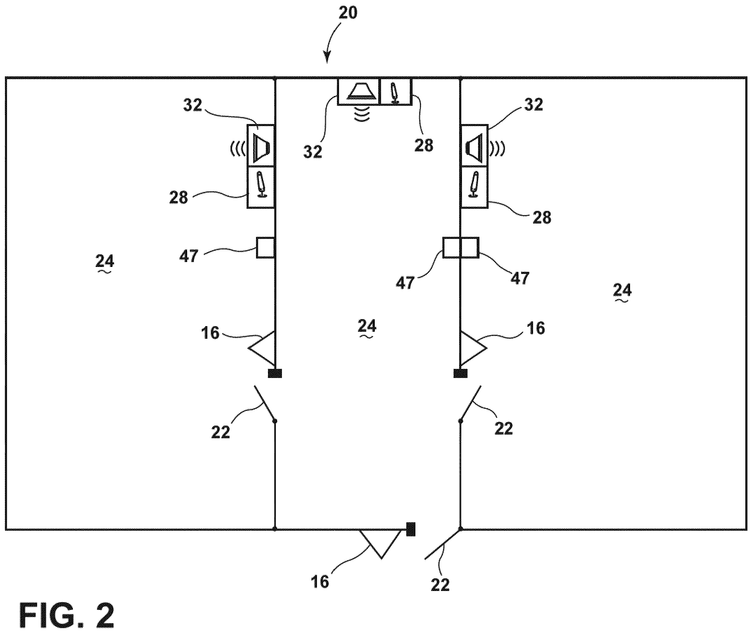

In one embodiment, wearable article building sensing units 16 are provided at locations within a building 20 as shown in Fig. 2. The wearable article building sensing units 16 detect the presence of a wearable article by wireless communication via various arrangements including low-power wireless communication. In some embodiments, the wearable article building sensing units 16 communicate using one or more of a Wi-Fi data connection, a Bluetooth data connection, an Android data connection, and an iOS data connection. Other wireless communication arrangements are contemplated. The wearable article building sensing units 16 include directional sensors and can also include motion sensors.

As shown in Fig. 2, the wearable article building sensing units 16 are provided near doors 22 within various rooms 24 of the building 20. An audio microphone system 26 shown in Fig. 1 includes microphones 28 located in the rooms 24 as shown in Fig. 2 for receiving verbal commands from an identified unique user. This embodiment includes a messaging system 30 as shown in Fig. 1 having audio speakers 32 shown in Fig. 2 that are located in the rooms 24 of the building 20 to provide audio messages to an identified unique user with a wearable article.

Fig. 1 also shows an interface 36 for communicating with the building management controller 12. In one embodiment, the interface 36 is a keyboard with a display monitor that is connected to the building management controller 12. The interface 36 may also be a portable personal wireless communication device, a cellular smartphone, or other devices. Finally, the building management controller 12 is accessible from a plurality of different types of interfaces 36 for programming and setting parameters for each identified unique user.

Fig. 1 shows a building alarm system 40 in communication with the building management controller 12. The building alarm system 40 is enabled/disabled by the building management controller 12 depending on the parameters and location of an identified unique user that is identified. Fig. 1 also shows a building access control system 44 in communication with the building management controller 12 to enable access or deny access to the building 20 or rooms 24 therein, depending on the parameters and the location of an identified unique user.

Fig. 1 illustrates a temperature control system 46 in communication with the building management controller 12. The temperature control system 46 controls the temperature of one or more areas that may include individual rooms 24 in the building 20. Further, the temperature control system 46 may control curtains, blinds or ventilation systems that have an indirect relationship to the temperature in the building 20. Temperature sensors 47 shown in Figs. 1 and 2 provide temperature values of one or more areas including the rooms 24 of the building 20 to the building management controller 12.

Fig. 1 illustrates a light control system 48 in communication with the building management controller 12. The building management controller 12 is configured to control one or more lights (not shown) in various areas including individual rooms 24 of the building 20 via the light control system 48. In some embodiments, ambient light sensors (not shown) disposed in areas of the building 20 including the rooms 24 provide ambient room light values to the building management controller 12.

Fig. 1 illustrates a wearable article sensing system 50 in communication with the building management controller 12. The wearable article sensing system 50 receives commands and information from an identified unique user of a wearable article and transmits the commands and information to the building management controller 12. The wearable article sensing system 50 interacts with wearable articles that perform the operations of the audio microphone system 26 and the messaging system 30. Thus, the systems 26, 30 are not necessarily provided in an embodiment that includes the wearable article sensing system 50. In some embodiments, the wearable article sensing system 50 is a remote cellular tower or other communication network or link. The information is routed through the communication network or link to the building management controller 12 via the Internet or a different communication network arrangement.

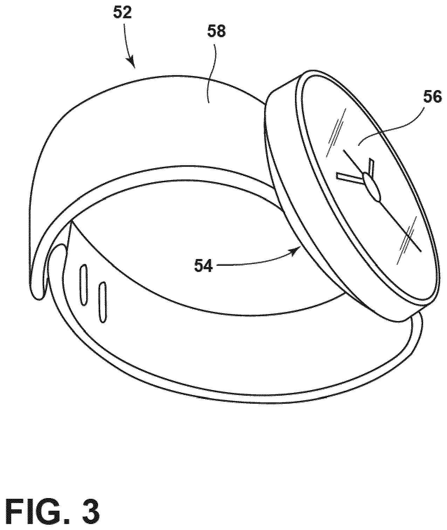

Fig. 3 illustrates one embodiment of a wearable article 52. The wearable article 52 is a smart wristwatch that includes an electronic device 54 having a display 56. The electronic device 54 is secured to a flexible mounting band 58 that is mountable to the wrist of a user.

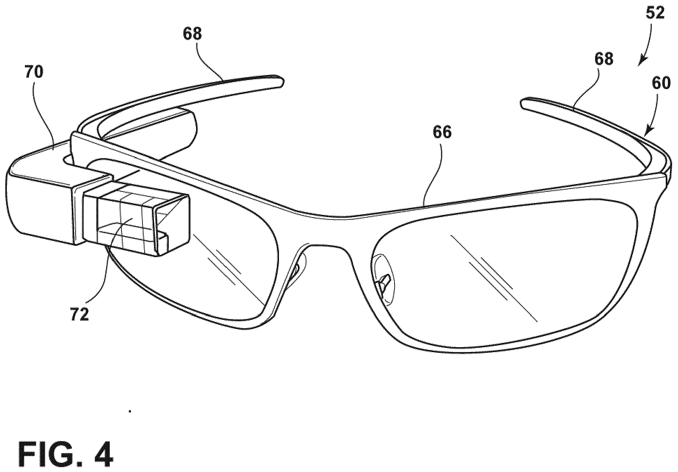

Fig. 4 illustrates another embodiment wherein the wearable article 52 is glasses 60. The glasses 60 include a frame 62, a pair of lenses 64, and a pair of arms 68. The glasses 60 also include an electronic device 70 having a display 72 for viewing by a user of the glasses.

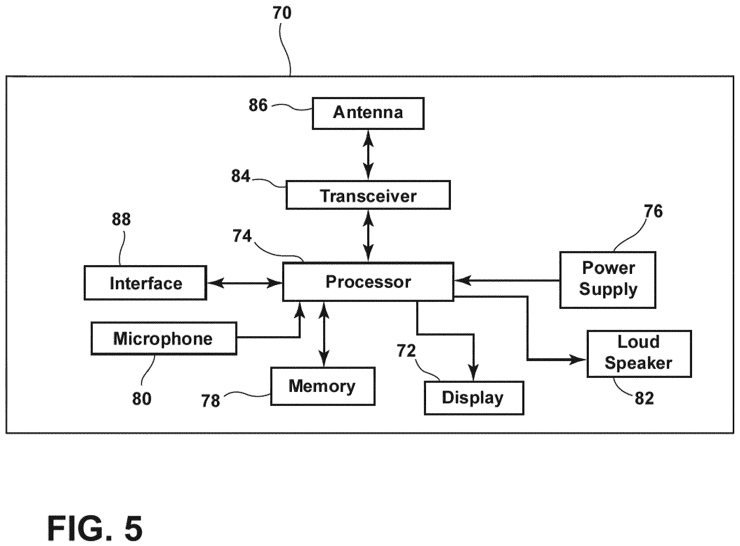

Figure 5 illustrates components of the electronic device 70 shown in Fig. 4 is a low power device. The components of the electronic device 70 include a wearable article controller or wearable article processor 74 that is in communication with the display 72 and that receives power from a power supply 76. The power supply 76 is a low power battery that powers components of the wearable article 52. The display 72 allows an identified unique user to know the status and condition of the systems of the building 20.

The wearable article processor 74 is also connected to a memory 78 that stores information. The memory provides information to and receives information from the wearable article processor 74. A microphone 80 and a loudspeaker 82 are also in communication with the wearable article processor 74. The microphone receives verbal commands from an identified unique user of the wearable article 52. The loudspeaker 82 outputs messages received from the building management controller 12. Thus, the microphone 28 and audio speakers 32 in the rooms 24 are not necessary for this embodiment.

Fig. 5 also shows the wearable article processor 74 in communication with a transceiver 84 that connects to an antenna 86. In some embodiments, the transceiver 84 of the wearable device broadcasts information to the wearable article building sensing units 16 located within a home. In other embodiments, the transceiver 84 broadcasts wireless signals to a cellular telephone tower or other communication arrangement. The remote tower includes a transceiver and an antenna for receiving information from the wearable article and transmitting information to the wearable article. In various embodiments, different ones of the systems and/or components are not included.

In one embodiment, an interface 88 is provided so that an identified unique user can physically input information into the wearable article processor 74 for storage in the memory 78 or to control devices. Thus, various instructions to operate the wearable article processor 74 for different purposes are stored therein. In another embodiment, the interface 88 is integrated with the display 72 as a touchscreen. A unique identifier for a unique user of a specific wearable article 52 is stored in the memory 78.

One embodiment of a wearable article 52 that includes the interface 88 does not, however, include a microphone 80 and a loudspeaker 82. In another embodiment that includes the microphone 80 and the loudspeaker 82 for communication and messaging, the display 72 and the interface 88 are not provided. Thus, various combinations of components are contemplated for the wearable article 52. In particular embodiments, the wearable article 52 may include a sensor module, for example a camera module (not shown).

While a smart watch as shown in Fig. 3 and glasses as shown in Fig. 4 are disclosed, various other wearable articles 52, including fitness bands, writstwatches and tags are contemplated. The tags are joined to keys or to a person. In some embodiments, the wearable article is one of a bracelet, a necklace or a ring. The primary difference between the wearable articles and mobile phones is that people tend to wear the articles while they are inside their home or place of business, whereas mobile phones will often be placed on a battery charger.

Each user has a specific identifier unique to the person that is stored in the memory 78 of the corresponding wearable article 52. Further, each user can program or otherwise store a user profile in the memory. The user profile is entered by an interface and includes desired temperature value for the identified unique user that can be specific to each room. For example, one identified unique user desires a cool temperature for sleeping in a bedroom and warmer temperatures for other rooms 24 within a building 20. Thus, different unique users have different profiles. A user profile stores room lighting levels and specific lights that the specific identified unique user wants illuminated when within a building 20 or specific areas including rooms 24 within the building. For example, an identified unique user may want a rear porch light illuminated. In some embodiments, the lights are programmed to operate only at certain times and/or when measured ambient light levels are less than a predetermined value for a given area or room.

The user profile stores access control features and building alarm system features. The access control part of a user profile is programmed to allow entry into some or all areas of a building 20 at some or all times of day when the identified unique user of the wearable article 52 is present. The building access control system 44 automatically unlocks or opens a door when the identified unique user approaches the door. In some embodiments, the identified unique user with a wearable article is denied access during certain hours. In conclusion, the building management controller 12 may limit access to particular areas of the building and limit entry times to particular areas.

The user profile also stores building alarm system information for the identifiable unique user. The building management controller 12 determines whether the building alarm system 40 is disabled, enabled or partially disabled when the identified unique user with a wearable article 52 approaches the building 20. Depending on the user profile and other factors, the building alarm system 40 is disabled to allow entry, and thereafter controlled in a manner dictated by the user profile. In some instances, the building alarm system 40 is partially disabled in the daytime and completely enabled at night.

In one embodiment a hierarchy of identified unique users is contemplated. In such an arrangement, different identified unique users have different profile values and different priorities compared to other users. A user profile may allow one specific identified unique user access to a building 20 or to specific areas including rooms 24 within a building, while a different identified unique user may not have access to a specific room 24 when the specific identified unique user is in an area of the building 20 or in the specific room. For example, another identified unique user may enter a bedroom that the specific identified unique user is located in according to the profile of the specific identified unique user, while a cleaning person or other identified unique user may not enter the bedroom when the specific identified unique user is located therein. In another instance, a primary specific identified unique user may have areas including one or more rooms 24 at desired temperature values, while other identified unique users having secondary user profiles with different desired temperature values have no control, and thus are ignored when the primary specific identified unique user is present in a room or in a wing or other area of a building 20.

In one operation, a valid identified unique user with a wearable article 52 approaches an exterior door 22 of a building 20 from outside. A wearable article building sensing unit 16 recognizes that someone is approaching and tries to communicate with any wearable article 52. Wireless signals are transmitted/received between the wearable article 52 and the wearable article building sensing unit 16. The wearable article building sensing unit 16 is programmed for recognizing the wearable article 52 by obtaining identifying information from a central or distributed location (such as an off-site server) or by being exposed to and recognizing the wearable article previously and storing the unique identifier therein or at the building management controller 12 for comparison.

Assuming the wearable article 52 is communicated with by wireless signals, and that the wearable article building sensing unit 16 recognizes the wearable article, the building sensing unit 16 provides information to the building management controller 12 that determines appropriate actions based upon variables and/or values programmed by a unique user in their user profile, or based upon preset values if the unique user does not program some of the values. After controlling the building access control system 44 to permit entry, the building management controller 12 resets the building access control system 44 to prevent access to others. Finally, the building management controller 12 controls operation of the temperature control system and the light control system 48 to the selected desires stored in the user profile of the unique user having the wearable article 52.

In one scenario, upon a valid identified unique user approaching and entering a building 20, either automatically or in response to some action (touching the door for example), the building alarm system 40 is disarmed at least in the area that the valid identified unique user is located, the building access control system 44 unlocks the door 22 and the heat or alternatively the air conditioning is adjusted by the temperature control system 46 for areas of the building to the values provided in the user profile. Further, one or more lights are activated by the light control system 48 in response to signals from the building management controller 12. In another scenario, upon exiting the building 20, the wearable article building sensing unit 16 identifies the unique user with the wearable article 52 leaving the building and provides an input to the building management controller 12. The building management controller 12 arms the building alarm system 40, controls the light control system 48 to deactivate one or more lights, and controls the temperature control system 46 to reduce the heat that is output in accordance with settings provided by the user profile of a primary user for situations when a building contains no identified unique users.

In one scenario, when the primary identified unique user is in the building 20 and the door is locked, a child with a wearable article 52 is an identified unique user approaches an exterior door 22 at an entrance of the building. In response to the wearable article building sensing unit 16 detecting the wearable article 52 of an identified unique child, the building access control system 44 unlocks the door and a voice message is played throughout the building 20 by the messaging system 30 to notify or inform the primary identified unique user and others that the child has arrived. In another embodiment, the loudspeaker 82 provided with the electronic device 70 of the wearable article 52 provides an audio message or the like to the primary identified unique user that indicates the identified unique user that is a child has arrived.

In another scenario, a delivery person approaches an entrance of the building 20 and leaves a delivered item on the doorstep. The delivery person has a wearable article that is detected by the wearable article building sensing unit 16. The wearable article building sensing unit 16 provides a unique identifier for the delivery person to the building management controller 12. The building management controller 12 provides a message through the messaging system 30 that a delivery person with a wearable article 52 is arriving. In another scenario, the building management system 10 is integrated with a Google Now communication system and receives a message at the building management controller 12 over the Internet or other communication network. In response to the message, the building management controller 12 provides an output to the messaging system 30 notifying or informing those in the building 20 that "UPS has just dropped off a package". In another embodiment, a message that a delivery person has arrived is transmitted directly to the wearable article 52 of a user at any location and the message is provided by the loudspeaker 82.

In another scenario, the building 20 is a place of business and the time is after hours. A valid cleaning person with a wearable article 52 approaches the building 20. The cleaning person with a valid wearable article 52 is identified and the building management controller 12 via the building access control system 44 permits access to the building 20 and to at least some rooms 24 in the building 20. Further, the lights are operated by the light control system 48 and temperature adjustment is provided by the temperature control system 46. After entry of the valid cleaning person, the building access control system 44 prevents access by another. When the valid cleaning person and their wearable article 52 leave the building 20 (sensed given the directional nature of sensing of the wearable article 52), the building management system 10 automatically readjusts the heat or air conditioning for areas of the building via the temperature control system 46 to save energy.

In one scenario, an identified unique user with a wearable article 52 walks into their home office in a building 20 at 8 PM with darkness outside. In response to user preferences set in the user profile of the identified unique user, the building management controller 12 operates the light control system 48 so that preselected lights are turned on for illumination and the temperature control system 46 controls the temperature values for one or more areas of the building to desired temperature values. Further, messages are played by the messaging system 30 or by a messaging system integrated with a business computer that is also actuated by the building management controller 12.

In another scenario, a number of valid people with wearable articles 52 enter a living room at a specific time of about 6 PM. User profiles of various unique users are detected via their wearable articles 52. The user profiles indicate a likelihood of watching a preselected television (TV) program. The building management controller 12 reads the user information for the unique identifier of one or more persons. In response to the unique identifiers and the time, along with hierarchy factors, the building management controller 12 closes room shades and/or curtains. Further, the building management controller 12 turns on the TV to a preselected channel based on user preferences and hierarchy factors of the people.

In the same scenario, at about 10 PM the wearable article building sensing units 16 detect that all of the valid people are in bedrooms. In view of the user profiles for the persons, the building management controller 12 provides signals to the temperature control system 46 to adjust the temperature values of each of the rooms to a desired value for the particular person. Further, the building management controller 12 has all of the exterior doors and selected interior doors 22 locked by the building access control system 44. Further, all of the alarm sensors of the building alarm system 40 are enabled throughout the building 20, except for the rooms or zones where the valid persons are located.

In a first new person scenario, a new unique identifier for a person is recognized by the wearable article building sensing unit 16, but the unique identifier is not matched with a user by the building management controller 12. The building management system 10 asks "I notice a new person is in the house, who is this?" The primary user tells the building management controller 12 via the audio microphone system 26 that the person is the baby sitter Jane. "Thank you, Should Jane be allowed access to the house?" In reply, the primary user tells the building management controller 12: "Yes, between 8 PM and 10 PM tonight only." Then, in the future the building management system 10 detects Jane at the front door 22 and states "Jane is at the front door" or "I notice Jane is here, do you plan to go out? Is 8 to 10 today still ok for access for Jane?" Thus, the building management system 10 easily adapts to changes input by the primary user. Voice recognition enables the building management controller 12 to recognize voice commands from the primary user or other persons that have the authority to change the settings and authorizations for the building management system 10.

In a second new person scenario, a child/family member/etc. is missing. An identified unique user issues a request for a location of a wearable article of another unique user. Compatible building management systems 10 integrated with security systems around the country are notified of the request for the location of the missing person and are provided with their wearable unique identifier. Then, if the missing person with the wearable article 52 comes into range of a wearable article building sensing unit 16 (in a store, in a house, near a house or any other building etc.) the building management system 10 that detects the wearable article 52 of the missing person notifies the authorities and the building management system 10 whereat the identified unique user issued a request for the location of the child/family member.

In some embodiments, an identified unique user has the ability to manually override their user preferences. Any identified unique user has the option to change their user preferences by logging into their account. The accounts are stored at one or more from the group of: the memory 78 of the wearable article 52, a memory for the building management controller 12, a memory located at a remote server, and on the cloud.

While automatically controlling a television with settings in a user profile is disclosed, in other embodiments, the same arrangement is provided for a sound system and an entertainment system. Further, content output by the television, the sound system and the entertainment system is selected based upon the user profile of an identified unique user. The step of controlling appliances includes other known devices.

In building management systems 10, the ability to know who is where is something that has, up until now, been quite difficult to accomplish. By making use of wearable articles, directional communications, and some basic logic we can create a solution that makes security and comfort much more invisible than is currently capable.

By knowing the location of all valid persons within a building, motion detectors and other alarm sensors remain active in zones or areas within the building that the valid persons are not located in or do not have access authorization to enter. Thus, the alarm system does not have to be disabled entirely, or even in most areas when a valid person is present. Further, as the person moves through the building, the alarms sensors in areas that they are approaching are disabled and alarm sensors in areas they are departing are restarted automatically.

Thus, the invention provides, among other things, a method and system for determining the presence and location of persons within a building 20 and automatically controlling building alarm systems 40, building access control systems 44, temperature control systems 46, light control systems 48, messaging systems 30, appliances including televisions and other devices provided within the building in accordance with the location of persons with a sensed wearable article 52. Various features and advantages of the invention are set forth in the following claims.

## Claims

1. A method for operating a building management system (10) to provide control of a building in response to sensing of a wearable article (52, 60) for a user, comprising:
a) wirelessly sensing a wearable article (52, 60);
b) identifying a unique user wearing the wearable article (52, 60);
c) determining a location of the wearable article (52, 60) of an identified unique user inside or outside of the building;
d) for an identified unique user approaching an entrance of the building or located within the building, based on a user profile for an identified unique user and the location of the wearable article of an identified unique user, controlling at least one from the group of: a building access control system, a building alarm system, one or more lights of the building, and temperature values of one or more areas of the building;
e) in response to the unique user issuing a request for a location of a second wearable article of a second unique user, providing the request to additional building management systems,
f) identifying whether the second wearable article is located in or near any of the additional building management systems (10),
g) informing the unique user of the location of the second wearable article that is located in or near one of the additional building management systems; and
h) controlling appliances upon entering and exiting areas by the wearable article (52, 60) of the identified unique user within the building based on the user profile, the location of an identified unique user, and voice commands from the identified unique user.

2. The method of operating a building management system according to claim 1, including limiting access to particular areas of the building and limiting entry into the building to predetermined times for an identified unique user.

3. The method of operating a building management system according to claim 1, including activating lights when an identified unique user enters into a room within the building and deactivating lights when an identified unique user is not located within the room within the building.

4. The method of operating a building management system according to claim 1, wherein the wearable article comprises a low power device that provides wireless signals, and the step of wirelessly sensing a wearable article comprises a wearable article building sensing unit configured to receive the wireless signals from the wearable article to determine the location of the wearable article.

5. The method of operating a building management system according to claim 4, including the steps of:
receiving a message from a remote location informing that a delivered item is being delivered at a building of the building management system, and
informing an identified unique user of the delivered item.

6. The method of operating a building management system according to claim 4, wherein the wearable article building sensing unit comprises a transceiver for communication with the wearable article via at least one from the group of: a Wi-Fi data connection, a Bluetooth data connection, an Android data connection, and an iOS data connection.

7. The method of operating a building management system according to claim 1, wherein the step of controlling upon approach of an identified unique user to an entrance, comprises controlling each of the building access control system, one or more lights within areas of the building, and temperature values of one or more areas within the building based on the user profile of an identified unique user and the location of an identified unique user.

8. The method according to claim 1, wherein the step of controlling appliances comprises operating at least one of the group of a television, a sound system and an entertainment system, wherein the at least one of the group of the television, the sound system and the entertainment system outputs content based upon the user profile of an identified unique user.

9. The method according to claim 1, wherein the wearable article comprises a microphone for sensing the voice commands, and in response to the voice commands, the wearable article provides the wireless signals to the wearable article sensor unit.

10. A building management system (10) for providing control of a building in response to sensing of a wearable article (52, 60) of a unique user, comprising:
a) a wearable article (52, 60) for wearing by a unique user;
b) at least one wearable article building sensing unit (16) configured to wirelessly obtain information from the wearable article; and
c) a building management controller (12) configured to:
c1) receive an output from the wearable article building sensing unit (16);
c2) identify a unique user with the wearable article (52, 60);
c3) determine a location of the wearable article (52, 60) of an identified unique user inside or outside of the building; and
c4) control at least one of: a building access control system (44), one or more lights , and temperature values of one or more areas of the building based on a user profile of an identified unique user and the location of the wearable article of an identified unique user; and
c5) in response to the unique user issuing a request for a location of a second wearable article of a second unique user, providing the request to additional building management systems,
c6) identifying whether the second wearable article is located in or near any of the additional building management systems (10),
c7) informing the unique user of the location of the second wearable article that is located in or near one of the additional building management systems; and
c8) controlling appliances upon entering and exiting areas by the wearable article (52, 60) of the identified unique user within the building based on the user profile, the location of an identified unique user, and voice commands from the identified unique user.

11. The building management system according to claim 10, wherein the building management controller (12) is configured to limit access to particular areas of the building and to limit entry times to particular areas of the building for an identified unique user.

12. The building management system according to claim 10, wherein the building management controller is configured to activate one or more lights when an identified unique user enters into an area of the building and deactivate one or more lights when an identified unique user is not located within the area of the building.

13. The building management system according to claim 10, wherein the wearable article comprises one from the group consisting of: glasses, a wristwatch, a bracelet, a necklace and a ring, and wherein the wearable article includes a low power device.

14. The building management system according to claim 10, wherein the wearable article comprises a processor with a memory, a transceiver and an antenna.

15. The building management system according to claim 10, further comprising a wearable article sensing system (50), said wearable article sensing system (50) comprising a remote tower for receiving information from the wearable article and transmitting information to the wearable article.

16. The building management system according to claim 15, wherein information from the remote tower is transmitted to the building management controller via a communication network.

## Patentansprüche

1. Verfahren zum Betreiben eines Gebäudemanagementsystems (10), um die Steuerung eines Gebäudes als Reaktion auf die Erfassung eines tragbaren Gegenstands (52, 60) für einen Anwender zu liefern, das Folgendes umfasst:
a) drahtlos Erfassen eines tragbaren Gegenstands (52, 60);
b) Identifizieren eines eindeutigen Anwenders, der den tragbaren Gegenstand (52, 60) trägt;
c) Bestimmen eines Orts des tragbaren Gegenstands (52, 60) eines identifizierten eindeutigen Anwenders innerhalb oder außerhalb des Gebäudes;
d) für einen identifizierten eindeutigen Anwender, der sich einem Eingang des Gebäudes nähert oder der sich innerhalb des Gebäudes befindet, anhand eines Anwenderprofils für einen identifizierten eindeutigen Anwender und dem Ort des tragbaren Gegenstands eines identifizierten eindeutigen Anwenders Steuern mindestens eines aus der folgenden Gruppe: Gebäudezugangssteuersystem, Gebäudealarmsystem, ein oder mehrere Lichter des Gebäudes und Temperaturwerte eines oder mehrerer Bereiche des Gebäudes;
e) als Reaktion darauf, dass der eindeutige Anwender eine Anforderung für einen Ort eines zweiten tragbaren Gegenstands eines zweiten eindeutigen Anwenders ausgibt, Liefern der Anforderung an zusätzliche Gebäudemanagementsysteme,
f) Identifizieren, ob sich der zweite tragbare Gegenstand in einem der zusätzlichen Gebäudemanagementsysteme (10) oder in dessen Nähe befindet,
g) Informieren des eindeutigen Anwenders über den Ort des zweiten tragbaren Gegenstands, der sich in einem der zusätzlichen Managementsysteme oder in dessen Nähe befindet; und
h) Steuern von Geräten beim Eintreten in Bereiche und Austreten aus den Bereichen durch den tragbaren Gegenstand (52, 60) des identifizierten eindeutigen Anwenders innerhalb des Gebäudes anhand des Anwenderprofils, des Orts eines identifizierten eindeutigen Anwenders und von Sprachbefehlen von dem identifizierten eindeutigen Anwender.

2. Verfahren zum Betreiben eines Gebäudemanagementsystems nach Anspruch 1, das enthält, den Zugang zu bestimmten Bereichen des Gebäudes zu begrenzen und den Eingang in das Gebäude zu vorbestimmten Zeiten für einen identifizierten eindeutigen Anwender zu begrenzen.

3. Verfahren zum Betreiben eines Gebäudemanagementsystems nach Anspruch 1, das enthält, Lichter zu aktivieren, wenn ein identifizierter eindeutiger Anwender in einen Raum innerhalb des Gebäudes eintritt, und die Lichter zu deaktivieren, wenn sich ein identifizierter eindeutiger Anwender nicht innerhalb des Raums innerhalb des Gebäudes befindet.

4. Verfahren zum Betreiben eines Gebäudemanagementsystems nach Anspruch 1, wobei der tragbare Gegenstand eine Niederleistungsvorrichtung umfasst, die drahtlose Signale liefert, und der Schritt des drahtlosen Erfassens eines tragbaren Gegenstands eine Gebäudeerfassungseinheit für tragbare Gegenstände umfasst, die konfiguriert ist, drahtlose Signale von dem tragbaren Gegenstand zu empfangen, um den Ort des tragbaren Gegenstands zu bestimmen.

5. Verfahren zum Betreiben eines Gebäudemanagementsystems nach Anspruch 4, das die folgenden Schritte umfasst:
Empfangen einer Nachricht von einem entfernten Ort, die informiert, dass ein geliefertes Objekt an einem Gebäude des Gebäudemanagementsystems geliefert wird, und
Informieren eines identifizierten eindeutigen Anwenders über das gelieferte Objekt.

6. Verfahren zum Betreiben eines Gebäudemanagementsystems nach Anspruch 4, wobei die Gebäudeerfassungseinheit für tragbare Gegenstände einen Sendeempfänger für eine Kommunikation mit dem tragbaren Gegenstand über mindestens eines der folgenden Gruppe umfasst: eine Wi-Fi-Datenverbindung, eine Bluetooth-Datenverbindung, eine Android-Datenverbindung und eine iOS-Datenverbindung.

7. Verfahren zum Betreiben eines Gebäudemanagementsystems nach Anspruch 1, wobei der Schritt des Steuerns bei einer Annäherung eines identifizierten eindeutigen Anwenders an einen Eingang umfasst, das Gebäudezugangssteuersystem, ein oder mehrere Lichter innerhalb von Bereichen des Gebäudes und Temperaturwerte eines oder mehrerer Bereiche innerhalb des Gebäudes anhand des Anwenderprofils eines identifizierten eindeutigen Anwenders und dem Ort eines identifizierten eindeutigen Anwenders zu steuern.

8. Verfahren nach Anspruch 1, wobei der Schritt des Steuerns von Geräten umfasst, mindestens eines aus einer Gruppe eines Fernsehers, einer Audioanlage und eines Entertainmentsystems zu betreiben, wobei das mindestens eine aus der Gruppe des Fernsehers, der Audioanlage und des Entertainmentsystems Inhalt anhand des Anwenderprofils eines identifizierten eindeutigen Anwenders ausgibt.

9. Verfahren nach Anspruch 1, wobei der tragbare Gegenstand ein Mikrofon zum Erfassen der Sprachbefehle umfasst und als Reaktion auf die Sprachbefehle der tragbare Gegenstand die drahtlosen Signale an die Sensoreinheit für tragbare Gegenstände liefert.

10. Gebäudemanagementsystem (10) zum Liefern einer Steuerung eines Gebäudes als Reaktion auf die Erfassung eines tragbaren Gegenstands (52, 60) eines eindeutigen Anwenders, das Folgendes umfasst:
a) einen tragbaren Gegenstand (52, 60) zum Tragen durch einen eindeutigen Anwender;
b) mindestens eine Gebäudeerfassungseinheit für tragbare Gegenstände (16), die konfiguriert ist, drahtlos Informationen von dem tragbaren Gegenstand zu erhalten;
c) eine Gebäudemanagementsteuereinheit (12), die konfiguriert ist zum:
c1) Empfangen einer Ausgabe von der Gebäudeerfassungseinheit für tragbare Gegenstände (16);
c2) Identifizieren eines eindeutigen Anwenders mit dem tragbaren Gegenstand (52, 60);
c3) Bestimmen eines Orts des tragbaren Gegenstands (52, 60) eines identifizierten eindeutigen Anwenders innerhalb oder außerhalb des Gebäudes; und
c4) Steuern mindestens eines der Folgenden: Gebäudezugangssteuersystem (44), ein oder mehrere Lichter und Temperaturwerte eines oder mehrerer Bereiche des Gebäudes anhand eines Anwenderprofils eines identifizierten eindeutigen Anwenders und des Orts des tragbaren Gegenstands eines identifizierten eindeutigen Anwenders; und
c5) als Reaktion darauf, dass der eindeutige Anwender eine Anforderung für einen Ort eines zweiten tragbaren Gegenstands eines zweiten eindeutigen Anwenders ausgibt, Liefern der Anforderung an zusätzliche Gebäudemanagementsysteme,
c6) Identifizieren, ob sich der zweite tragbare Gegenstand in einem der zusätzlichen Gebäudemanagementsysteme (10) oder in dessen Nähe befindet,
c7) Informieren des eindeutigen Anwenders über den Ort des zweiten tragbaren Gegenstands, der sich in den oder in der Nähe der zusätzlichen Gebäudemanagementsysteme befindet; und
c8) Steuern von Geräten beim Eintreten in Bereiche und Austreten aus den Bereichen durch den tragbaren Gegenstand (52, 60) des identifizierten eindeutigen Anwenders innerhalb des Gebäudes anhand des Anwenderprofils, des Orts eines identifizierten eindeutigen Anwenders und von Sprachbefehlen von dem identifizierten eindeutigen Anwender.

11. Gebäudemanagementsystem nach Anspruch 10, wobei die Gebäudemanagementsteuereinheit (12) konfiguriert ist, den Zugang zu bestimmten Bereichen des Gebäudes zu begrenzen und die Eintrittszeiten zu bestimmten Bereichen des Gebäudes für einen identifizierten eindeutigen Anwender zu begrenzen.

12. Gebäudemanagementsystem nach Anspruch 10, wobei die Gebäudemanagementsteuereinheit konfiguriert ist, ein oder mehrere Lichter zu aktivieren, wenn ein identifizierter eindeutiger Anwender in einen Bereich des Gebäudes eintritt und ein oder mehrere Lichter zu deaktivieren, wenn sich ein identifizierter eindeutiger Anwender nicht innerhalb des Bereichs des Gebäudes befindet.

13. Gebäudemanagementsystem nach Anspruch 10, wobei der tragbare Gegenstand eines aus der Gruppe umfasst, die aus Folgendem besteht: einer Brille, einer Armbanduhr, einem Armband, einer Halskette und einem Ring, wobei der tragbare Gegenstand eine Niederleistungsvorrichtung umfasst.

14. Gebäudemanagementsystem nach Anspruch 10, wobei der tragbare Gegenstand einen Prozessor mit einem Speicher, einen Sendeempfänger und eine Antenne umfasst.

15. Gebäudemanagementsystem nach Anspruch 10, das ferner ein Erfassungssystem für tragbare Gegenstände (50) umfasst, wobei das Erfassungssystem für tragbare Gegenstände (50) einen entfernten Mast zum Empfangen von Informationen von dem tragbaren Gegenstand und Senden von Informationen an den tragbaren Gegenstand umfasst.

16. Gebäudemanagementsystem nach Anspruch 15, wobei Informationen von dem entfernten Mast an die Gebäudemanagementsteuereinheit über ein Kommunikationsnetz gesendet werden.

## Revendications

1. Procédé d'exploitation d'un système de gestion de bâtiment (10) pour assurer la commande d'un bâtiment en réponse à la détection d'un article vestimentaire (52, 60) d'un utilisateur, comprenant :
a) la détection en mode sans fil d'un article vestimentaire (52, 60);
b) l'identification d'un utilisateur unique portant l'article vestimentaire (52, 60) ;
c) la détermination d'un emplacement de l'article vestimentaire (52, 60) d'un utilisateur unique identifié à l'intérieur ou à l'extérieur du bâtiment ;
d) pour un utilisateur unique identifié approchant d'une entrée du bâtiment ou situé à l'intérieur du bâtiment, en fonction d'un profil d'utilisateur d'un utilisateur unique identifié et de l'emplacement de l'article vestimentaire d'un utilisateur unique identifié, la commande d'au moins un du groupe : d'un système de commande d'accès au bâtiment, d'un système d'alarme du bâtiment, d'un ou de plusieurs éclairages du bâtiment, et de valeurs de température d'un ou de plusieurs secteurs du bâtiment ;
e) en réponse à l'émission par l'utilisateur unique d'une demande d'un emplacement d'un second article vestimentaire d'un second utilisateur unique, la fourniture de la demande à des systèmes de gestion de bâtiment supplémentaires,
f) l'identification que le second article vestimentaire est situé dans ou près de n'importe lequel des systèmes de gestion de bâtiment supplémentaires (10),
g) la communication à l'utilisateur unique de l'emplacement du second article vestimentaire qui est situé dans ou près d'un des systèmes de gestion de bâtiment supplémentaires ; et
h) la commande d'appareil lors de l'entrée ou de la sortie d'un secteur par l'article vestimentaire (52, 60) de l'utilisateur unique identifié à l'intérieur du bâtiment en fonction du profil d'utilisateur, de l'emplacement d'un utilisateur unique identifié, et de commandes vocales de l'utilisateur unique identifié.

2. Procédé d'exploitation d'un système de gestion de bâtiment selon la revendication 1, comportant la limitation de l'accès à des secteurs particuliers du bâtiment et la limitation de l'entrée dans le bâtiment à des heures prédéterminées pour un utilisateur unique identifié.

3. Procédé d'exploitation d'un système de gestion de bâtiment selon la revendication 1, comportant l'activation d'éclairages quand un utilisateur unique identifié entre dans une salle à l'intérieur du bâtiment et la désactivation d'éclairages quand un utilisateur unique identifié ne se trouve pas dans la salle à l'intérieur du bâtiment.

4. Procédé d'exploitation d'un système de gestion de bâtiment selon la revendication 1, dans lequel l'article vestimentaire comprend un dispositif basse puissance qui fournit des signaux sans fil, et l'étape de détection en mode sans fil d'un article vestimentaire comprend une unité de détection de bâtiment d'article vestimentaire configurée pour recevoir les signaux sans fil depuis l'article vestimentaire pour déterminer l'emplacement du l'article vestimentaire.

5. Procédé d'exploitation d'un système de gestion de bâtiment selon la revendication 4, comportant les étapes suivantes :
réception d'un message depuis un emplacement distant informant qu'un article livré est en cours de livraison dans un bâtiment du système de gestion de bâtiment, et
la communication à un utilisateur unique identifié de l'article livré.

6. Procédé d'exploitation d'un système de gestion de bâtiment selon la revendication 1, dans lequel l'unité de détection de bâtiment d'article vestimentaire comprend un émetteur-récepteur destiné aux communications avec l'article vestimentaire par l'intermédiaire d'au moins une : d'une connexion de données Wi-Fi, d'une connexion de données Bluetooth, d'une connexion de données Android, et d'une connexion de données iOS.

7. Procédé d'exploitation d'un système de gestion de bâtiment selon la revendication 1, dans lequel l'étape de commande lors de l'approche d'une entrée par un utilisateur unique identifié comprend la commande de chacun du système de commande d'accès au bâtiment, d'un ou de plusieurs éclairages dans des secteurs du bâtiment, et de valeurs de température d'un ou de plusieurs secteurs dans le bâtiment en fonction du profil d'utilisateur d'un utilisateur unique identifié et de l'emplacement d'un utilisateur unique identifié.

8. Procédé selon la revendication 1, dans lequel l'étape de commande d'appareils comprend l'exploitation d'au moins un du groupe d'un téléviseur, d'un système sonore et d'un système de divertissement, dans lequel l'au moins un du groupe du téléviseur, du système sonore et système de divertissement produit en sortie un contenu en fonction du profil d'utilisateur d'un utilisateur unique identifié.

9. Procédé selon la revendication 1, dans lequel l'article vestimentaire comprend un microphone pour détecter les commandes vocales, et en réponse aux commandes vocales, l'article vestimentaire fournit les signaux sans fil à l'unité de capteur d'article vestimentaire.

10. Système de gestion de bâtiment (10) destiné à assurer la commande d'un bâtiment en réponse à la détection d'un article vestimentaire (52, 60) d'un utilisateur unique, comprenant :
a) un article vestimentaire (52, 60) destiné à être porté par un utilisateur unique ;
b) au moins une unité de détection de bâtiment d'article vestimentaire (16) configurée pour obtenir en mode sans fil des informations à partir de l'article vestimentaire ; et
c) un contrôleur de gestion de bâtiment (12) configuré pour :
c1) recevoir une sortie depuis l'unité de détection de bâtiment d'article vestimentaire (16) ;
c2) identifier un utilisateur unique portant l'article vestimentaire (52, 60) ;
c3) déterminer un emplacement de l'article vestimentaire (52, 60) d'un utilisateur unique identifié à l'intérieur ou à l'extérieur du bâtiment ; et
c4) commander au moins un : d'un système de commande d'accès au bâtiment (44), d'un ou plusieurs éclairages, et de valeurs de température d'un ou de plusieurs secteurs du bâtiment en fonction d'un profil d'utilisateur d'un utilisateur unique identifié et de l'emplacement de l'article vestimentaire d'un utilisateur unique identifié ; et
c5) en réponse à l'émission par l'utilisateur unique d'une demande d'un emplacement d'un second article vestimentaire d'un second utilisateur unique, la fourniture de la demande à des systèmes de gestion de bâtiment supplémentaires,
c6) l'identification que le second article vestimentaire est situé dans ou près de n'importe lequel des systèmes de gestion de bâtiment supplémentaires (10),
c7) la communication à l'utilisateur unique de l'emplacement du second article vestimentaire qui est situé dans ou près d'un des systèmes de gestion de bâtiment supplémentaires ; et
c8) la commande d'appareils lors de l'entrée ou de la sortie de secteurs par l'article vestimentaire (52, 60) de l'utilisateur unique identifié à l'intérieur du bâtiment en fonction du profil d'utilisateur, de l'emplacement d'un utilisateur unique identifié, et de commandes vocales de l'utilisateur unique identifié.

11. Système de gestion de bâtiment selon la revendication 10, dans lequel le contrôleur de gestion de bâtiment (12) est configuré pour limiter l'accès à des secteurs particuliers du bâtiment et limiter les temps d'entrée dans des secteurs particuliers du bâtiment pour un utilisateur unique identifié.

12. Système de gestion de bâtiment selon la revendication 10, dans lequel le contrôleur de gestion de bâtiment (12) est configuré pour activer un ou plusieurs éclairages quand un utilisateur unique identifié entre dans un secteur du bâtiment et désactiver un ou plusieurs éclairages quand un utilisateur unique identifié ne se trouve pas dans le secteur du bâtiment.

13. Système de gestion de bâtiment selon la revendication 10, dans lequel l'article vestimentaire comprend un du groupe consistant en : lunettes, montre-bracelet, bracelet, collier et bague, et dans lequel l'article vestimentaire comporte un dispositif basse puissance.

14. Système de gestion de bâtiment selon la revendication 10, dans lequel l'article vestimentaire comprend un processeur avec une mémoire, un émetteur-récepteur et une antenne.

15. Système de gestion de bâtiment selon la revendication 10, comprenant en outre un système de détection d'article vestimentaire (50), ledit système de détection d'article vestimentaire (50) comprenant une tour distante pour recevoir des informations depuis l'article vestimentaire et transmettre des informations à l'article vestimentaire.

16. Système de gestion de bâtiment selon la revendication 15, dans lequel des informations depuis la tour distante sont transmises au contrôleur de gestion de bâtiment par l'intermédiaire d'un réseau de communication.
